# EUROPÄISCHE PATENTSCHRIFT

(11) **EP 2 988 893 B1**
(45) Veröffentlichungstag und Bekanntmachung des Hinweises auf die Patenterteilung: **05.12.2018**
(21) Anmeldenummer: 14725073.2
(22) Anmeldetag: 13.05.2014
(51) Int. Cl.: B22F 1/00, B22F 1/02, B05C 19/00, B05C 19/04, B29C 64/153, B22F 3/105

(54) **ANORDNUNG ZUM AUFRAKELN EINES PULVERS**
ARRANGEMENT FOR COATING A POWDER
DISPOSITIF DE DÉPÔT DE POUDRE À LA RACLETTE

(30) Priorität: 28.05.2013 DE 102013209963
(43) Veröffentlichungstag der Anmeldung: 02.03.2016
(73) Patentinhaber: Siemens Aktiengesellschaft, 80333 München (DE)
(72) Erfinder: SCHÄFER, Martin, 10557 Berlin (DE); AYDIN, Ömer, 10969 Berlin (DE); PILZ, Heinz, 14513 Teltow (DE)
(86) Internationale Anmeldenummer: PCT/EP2014/059737
(87) Internationale Veröffentlichungsnummer: WO 2014/191200

(56) Entgegenhaltungen:
- EP-A1- 1 439 050
- DE-A1- 4 325 573
- DE-B3-102006 056 422
- DE-C1- 19 649 865

## Beschreibung

Die Erfindung bezieht sich auf eine Anordnung mit einer Prozesskammer, einer in der Prozesskammer befindlichen Beschichtungsplattform und einer Rakeleinrichtung mit einem in der Prozesskammer befindlichen Rakelelement zum Aufrakeln eines Pulvers, insbesondere eines Metall- oder Keramikpulvers. Außerdem ist vorgesehen, dass die Anordnung eine Austauscheinrichtung aufweist, die zum Ersetzen mindestens eines Abschnitts des Rakelelements durch einen anderen Abschnitt desselben Rakelelements oder zum Ersetzen des gesamten Rakelelements durch ein anderes Rakelelement innerhalb der Prozesskammer und bei geschlossener Prozesskammer geeignet ist.

Eine derartige Anordnung ist beispielsweise in der Doktorarbeit "Die generative Fertigung mittels Laser-Sintern: Scanstrategien, Einflüsse verschiedener Prozessparameter auf die mechanischen und optischen Eigenschaften beim LS von Thermoplasten und deren Nachbearbeitungsmöglichkeiten" (Wesam Kaddar, von der Fakultät für Ingenieurswissenschaften, Abteilung Maschinenbau und Verfahrenstechnik der Universität Duisburg-Essen, zur Erlangung des akademischen Grades Dr.-Ing. genehmigte Dissertation, 17. November 2010) beschrieben.

Gemäß der DE 10 2006 056 422 B3 ist eine Anordnung zum selektiven Laserschmelzen beschrieben, bei der eine Rakeleinrichtung zum Aufrakeln von Pulver in einem Pulverbett zum Einsatz kommt. Diese Anordnung weist außerdem eine Austauscheinrichtung auf, mit der das Rakelelement abschnittsweise oder vollständig ausgetauscht werden kann. Die Austauscheinrichtung kann durch einen Computer angesteuert werden, wobei dieser einen Austausch der Rakeleinrichtung in definierten Zeitabständen vorsieht.

Bei Anordnungen zum Aufrakeln eines Pulvers besteht das Problem, dass die zum Aufrakeln eingesetzten Rakelelemente aufgrund der auftretenden mechanischen Belastungen mit der Zeit verschleißen und die Beschichtungsqualität beim Aufrakeln mit der Zeit abnimmt. Um eine ausreichende Beschichtungsqualität zu gewährleisten, muss demgemäß regelmäßig ein Austausch der eingesetzten Rakelelemente erfolgen.

Der Erfindung liegt die Aufgabe zugrunde, eine Anordnung anzugeben, mit der sich eine besonders hohe Qualität der aufgerakelten Schichten gewährleisten lässt.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Erfindungsgemäß ist vorgesehen, dass der Zustand der Rakelelemente individuell erfasst wird und ein Rakelwechsel oder ein Rakelabschnittswechsel nur dann erfolgt, wenn das Rakelelement oder dessen Abschnitte tatsächlich verschlissen sind. Demgemäß wird es als vorteilhaft angesehen, wenn die Anordnung eine mit der Austauscheinrichtung verbundene Verschleißbestimmungseinrichtung zum Bestimmen des Verschleißes des Rakelelements aufweist und die Verschleißbestimmungseinrichtung derart ausgestaltet ist, dass sie ein Steuersignal für die Austauscheinrichtung zum Ersetzen des aktiven Abschnitts des aktivierten Rakelelements durch einen anderen Abschnitt desselben Rakelelements oder zum Ersetzen des gesamten aktivierten Rakelelements durch ein anderes Rakelelement erzeugt, wenn das aktivierte Rakelelement oder der aktive Abschnitt des aktivierten Rakelelements verschlissen ist. Der Rakelwechsel bzw. der Rakelabschnittswechsel erfolgt also vorzugsweise automatisiert und in Abhängigkeit des tatsächlichen Verschleißes.

Ein wesentlicher Vorteil der erfindungsgemäßen Anordnung ist darin zu sehen, dass diese einen Austausch von Rakelelementen bei geschlossener Prozesskammer ermöglicht. Ein Öffnen der Prozesskammer und ein Beeinflussen oder Verschlechtern der in der Prozesskammer vorhandenen Prozessbedingungen, insbesondere ein Verändern der Temperatur und/oder der Prozessgase innerhalb der Prozesskammer, lässt sich somit vermeiden. Die Qualität der aufgerakelten Schichten und des sich im Aufbau befindenden Bauteils leidet somit unter einem Rakelwechsel nicht.

Gemäß einer ersten besonders bevorzugten Ausgestaltung der Anordnung ist vorgesehen, dass die Austauscheinrichtung einen Mehrfachkopf, insbesondere einen Schwenkkopf oder Revolverkopf, aufweist, an dem zumindest zwei Rakelelemente befestigt sind, die wahlweise zum Aufrakeln des Pulvers auf der Beschichtungsplattform ausgewählt und aktiviert werden können. Mit einem Mehrfachkopf lässt sich ein Austausch von Rakelelementen besonders einfach und schnell durchführen.

Gemäß einer anderen bevorzugten Ausgestaltung ist vorgesehen, dass die Austauscheinrichtung eine Wechselstation, in der ein oder mehrere andere Rakelelemente gelagert sind, und eine Transporteinrichtung aufweist, und die Transporteinrichtung geeignet ist, das jeweils zum Aufrakeln des Pulvers aktivierte Rakelelement durch eines der anderen Rakelelemente zu ersetzen, das oder die in der Wechselstation gelagert sind. Ein Vorteil einer Wechselstation besteht darin, dass eine besonders große Zahl an Ersatzrakeln gelagert und somit zur Verfügung gestellt werden kann.

Gemäß einer weiteren bevorzugten Ausgestaltung der Anordnung ist vorgesehen, dass die Austauscheinrichtung eine Verschiebeeinrichtung umfasst, die ein Verschieben eines auszutauschenden Abschnitts des aktivierten Rakelelements relativ zu der Beschichtungsplattform derart ermöglicht, dass der auszutauschende Abschnitt des Rakelelements aus dem ihm zugeordneten Beschichtungsabschnitt auf der Beschichtungsplattform herausgeschoben und durch einen anderen Abschnitt desselben Rakelelements ersetzt wird. Bei dieser Ausgestaltung müssen keine Ersatzrakel bereitgestellt werden, verschlissene Rakelabschnitte lassen sich durch noch unverschlissene Rakelabschnitte desselben Rakels ersetzen.

Gemäß einer weiteren vorteilhaften Ausgestaltung ist vorgesehen, dass ein Teil des Rakelelements auf einer Vorratsrolle aufgerollt ist und die Austauscheinrichtung derart ausgestaltet ist, dass sie zum Austauschen eines auszutauschenden Abschnitts des Rakelelements einen Teilabschnitt des Rakelelements von der Vorratsrolle abrollt und einen anderen Teilabschnitt des Rakelelements auf einer korrespondierenden Aufnahmerolle aufrollt. Das Aufrollen eines Rakelelements auf einer Vorratsrolle ermöglicht eine besonders platzsparende Lagerung noch unbenutzter Rakelabschnitte eines Rakelelements innerhalb der Prozesskammer.

Bei der letztgenannten Variante wird es als besonders vorteilhaft angesehen, wenn die Austauscheinrichtung eine Ersatzrollenaufnahmevorrichtung zur Aufnahme mindestens einer Ersatzrolle aufweist, auf der ein anderes Rakelelement aufgerollt ist, und die Ersatzrollenaufnahmevorrichtung relativ zu der Vorratsrolle derart angeordnet ist, dass das andere Rakelelement auf der Ersatzrolle mit dem Rakelelement auf der Vorratsrolle zwecks Gewährleistung eines kontinuierlichen Rakelbetriebs verbindbar ist. Durch das Vorsehen einer oder mehrerer Ersatzrollen lässt sich ein besonders langer Rakelbetrieb gewährleisten, ohne dass in die Prozesskammer zum Zwecke des Rakelwechsels eingegriffen werden muss.

Besonders einfach und damit vorteilhaft lässt sich eine Verschleißbestimmung durchführen, wenn die Anordnung eine Rakelbewegungseinrichtung aufweist und die Verschleißbestimmungseinrichtung geeignet ist, den Antriebsmotor zu überwachen und auf einen Verschleiß des Rakelelements zu schließen, wenn eine Belastungsänderung des Antriebsmotors erfasst wird.

Zusätzlich oder alternativ kann die Verschleißbestimmungseinrichtung einen Verschleißsensor, insbesondere in Form einer Bildaufnahmeeinrichtung, einer Lichttransmissionsmesseinrichtung, eines kapazitiven Sensorelements oder eines Kraftsensors, umfassen.

Vorzugsweise erfasst der Sensor die gesamte aktive Rakelkante des Rakelelements. Alternativ kann vorgesehen sein, dass die Anordnung eine Sensorbewegungseinrichtung aufweist, mit der sich der Sensor zur Verschleißbestimmung relativ zum Rakelelement bewegen lässt.

Gemäß einer bevorzugten Ausgestaltung ist vorgesehen, dass die Verschleißbestimmungseinrichtung eine Bildaufnahmeeinrichtung zur Beobachtung des Rakelelements und eine mit der Bildaufnahmeeinrichtung verbundene Bildauswerteinrichtung aufweist, die zur Bestimmung des Verschleißzustands des Rakelelements anhand der Bilder der Bildaufnahmeeinrichtung geeignet ist.

Zusätzlich oder alternativ kann vorgesehen sein, dass die Verschleißbestimmungseinrichtung aufweist: einen Kraftsensor, der am oder im Rakelelement angeordnet ist und zur Messung der Krafteinwirkung auf das Rakelelement während des Rakelvorgangs geeignet ist, und eine Auswerteinrichtung, die anhand der Kraftmesswerte auf den Verschleißzustand des Rakelelements schließt.

Als besonders vorteilhaft wird es angesehen, wenn das Rakelelement aus einem Werkstoff hergestellt wird, dem mindestens ein reaktionsfähiges System zugesetzt ist, welches die lokale Krafteinwirkung oder die lokale Temperatur über die gesamte aktive Rakelkante des Rakelelements oder zumindest einen Abschnitt davon erfassen und entsprechende Messwerte oder Messgrößen ausgangsseitig zur weiteren Auswertung ausgeben kann.

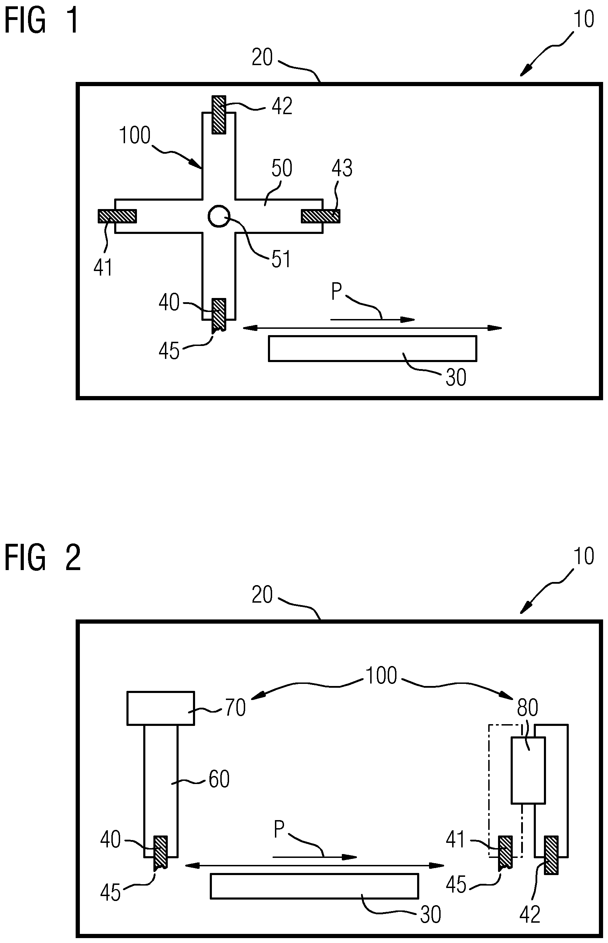

Die Erfindung wird nachfolgend anhand von Ausführungsbeispielen näher erläutert; dabei zeigen beispielhaft
- Figur 1: ein Ausführungsbeispiel für eine Anordnung zum Aufrakeln eines Pulvers mit einer Austauscheinrichtung, die einen Mehrfachkopf in Form eines Schwenk- oder Revolverkopfes aufweist,
- Figur 2: ein weiteres Ausführungsbeispiel für eine Anordnung zum Aufrakeln eines Pulvers, wobei die Anordnung eine Austauscheinrichtung mit einer Transporteinrichtung und einer Wechselstation umfasst,

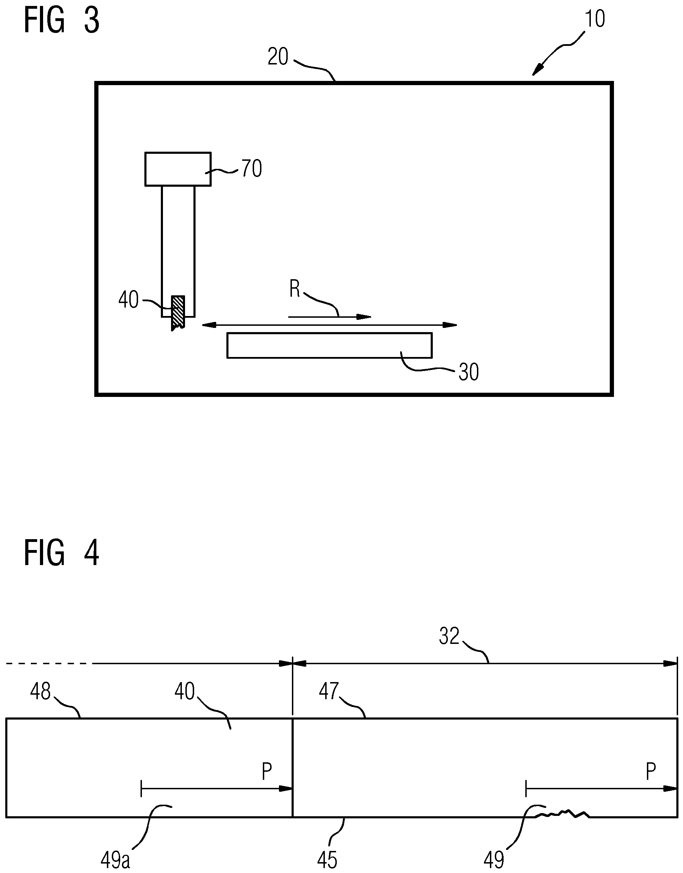

- Figur 3: ein weiteres Ausführungsbeispiel für eine Anordnung zum Aufrakeln eines Pulvers, wobei die Anordnung eine Verschiebeeinrichtung aufweist, mit der sich ein Rakelelement relativ zu einer Beschichtungsplattform derart verschieben lässt, dass ein aktiver Abschnitt des Rakelelements aus dem Beschichtungsabschnitt der Beschichtungsplattform herausgeschoben und durch einen anderen Abschnitt desselben Rakelelements ersetzt wird,
- Figur 4: das Rakelelement gemäß Figur 3 in einer Sicht von vorn,

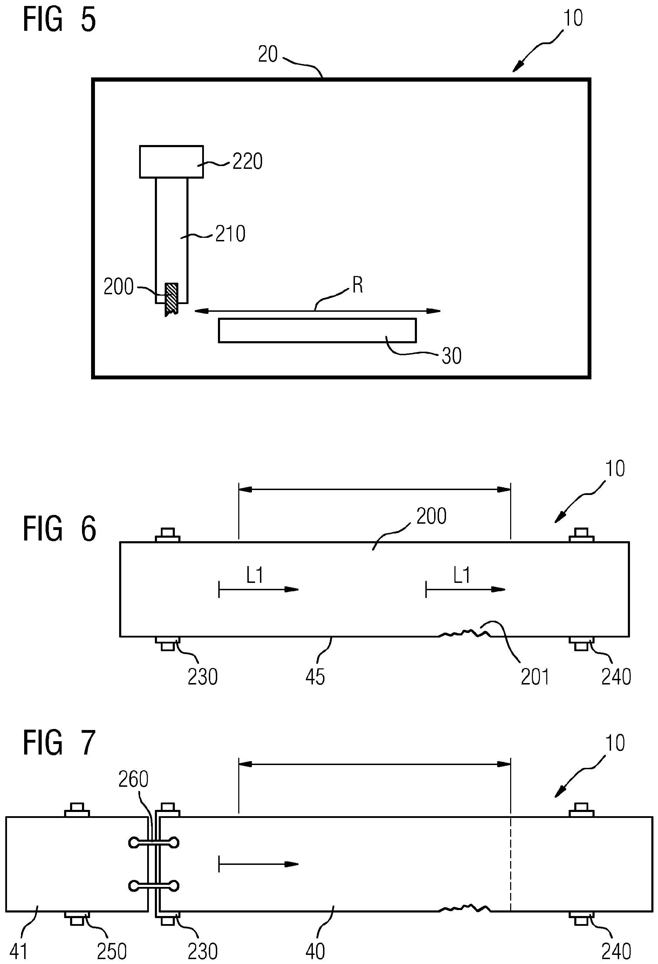

- Figur 5: ein weiteres Ausführungsbeispiel für eine Anordnung zum Aufrakeln eines Pulvers, wobei ein Rakelelement von einer Vorratsrolle auf eine Aufnahmerolle aufgerollt werden kann, um den zum Aufrakeln aktiven Rakelabschnitt durch einen neuen, auf der Vorratsrolle befindlichen Rakelabschnitt zu ersetzen,
- Figur 6: das Rakelelement gemäß Figur 5 sowie die Vorratsrolle und die Aufnahmerolle in einer Sicht von vorn,
- Figur 7: ein weiteres Ausführungsbeispiel für eine Anordnung zum Aufrakeln eines Pulvers, wobei zusätzlich zu der Vorratsrolle und der Aufnahmerolle gemäß den Figuren 5 und 6 zusätzlich eine Ersatzrolle mit einem weiteren Rakelelement vorhanden ist, das das auf der Vorratsrolle aufgerollte Rakelelement ersetzen kann, sobald dieses von der Vorratsrolle vollständig abgerollt worden ist,

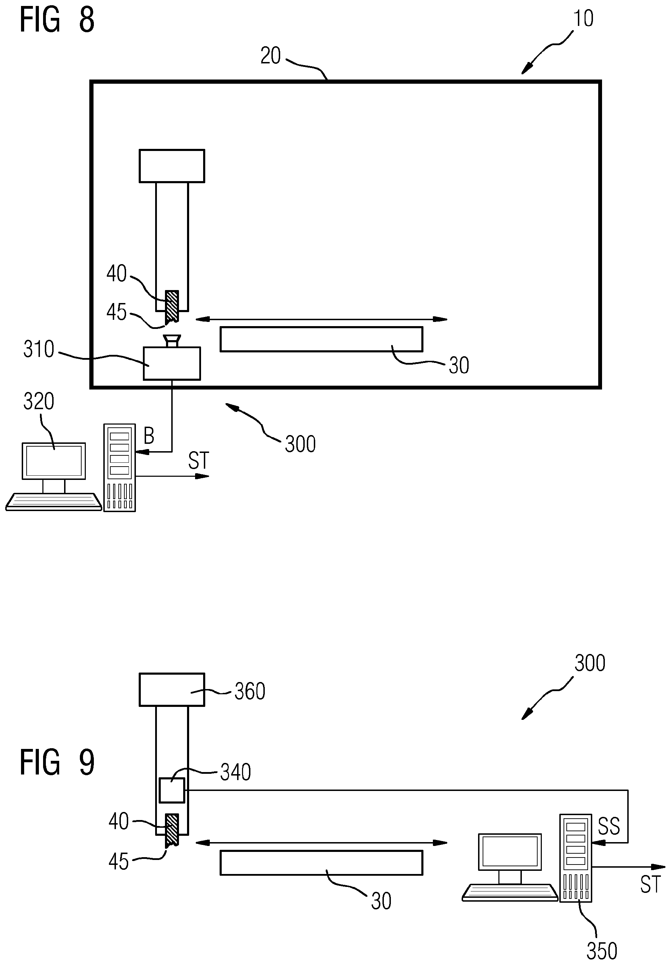

- Figur 8: ein weiteres Ausführungsbeispiel für eine Anordnung zum Aufrakeln eines Pulvers, wobei zusätzlich zu einer nicht gezeigten Austauscheinrichtung eine Verschleißbestimmungseinrichtung vorhanden ist, die eine Bildaufnahmeeinrichtung sowie eine Bildauswerteinrichtung umfasst,
- Figur 9: ein weiteres Ausführungsbeispiel für eine Verschleißbestimmungseinrichtung für eine Anordnung zum Aufrakeln eines Pulvers, wobei die Verschleißbestimmungseinrichtung einen Sensor, insbesondere einen Belastungssensor, aufweist, der im Bereich einer Rakelhalterung des Rakelelements angeordnet ist,

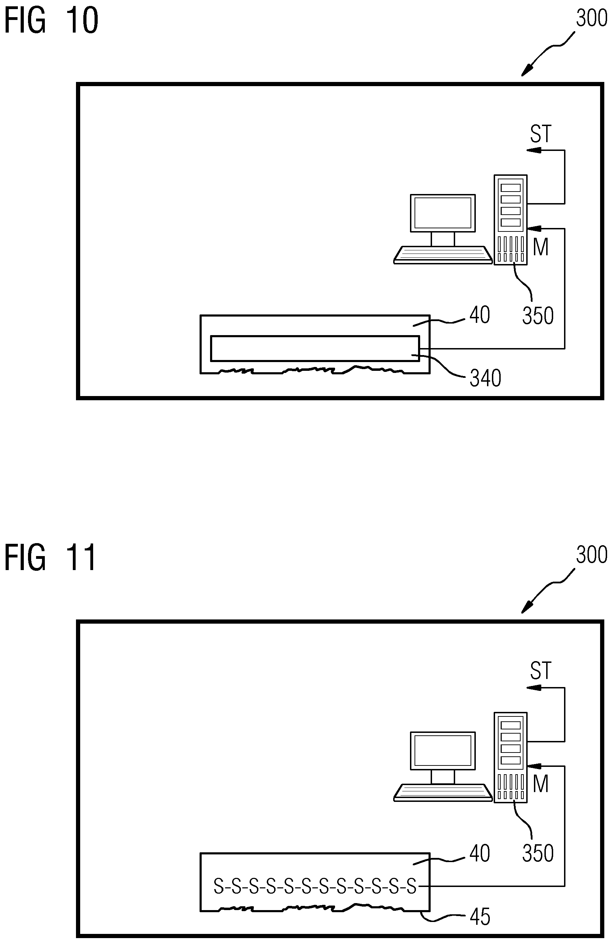

- Figur 10: ein weiteres Ausführungsbeispiel für eine Verschleißbestimmungseinrichtung für eine Anordnung zum Aufrakeln eines Pulvers, wobei die Verschleißbestimmungseinrichtung einen Sensor, insbesondere einen Belastungssensor umfasst, der im Bereich des Rakelelements, beispielsweise außen auf dem Rakelelement, angeordnet ist,
- Figur 11: ein weiteres Ausführungsbeispiel für eine Verschleißbestimmungseinrichtung für eine Anordnung zum Aufrakeln eines Pulvers, wobei ein Sensor, insbesondere ein Belastungssensor, der Verschleißbestimmungseinrichtung in das Sensorelement integriert ist und eine ortsaufgelöste Bestimmung der Belastung und/oder des Verschleißes des Rakelelements ermöglicht,

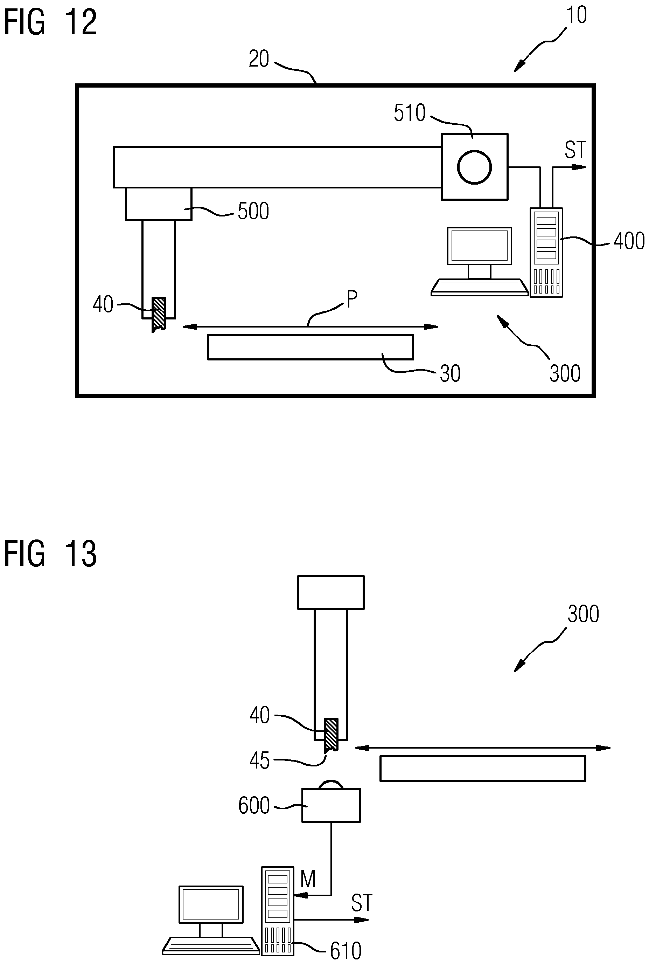

- Figur 12: ein weiteres Ausführungsbeispiel für eine Verschleißbestimmungseinrichtung für eine Anordnung zum Aufrakeln eines Pulvers, wobei die Verschleißbestimmungseinrichtung eine Steuereinrichtung zum Ansteuern eines Antriebsmotors, der zum Bewegen des Rakelelements über der Beschichtungsplattform dient, aufweist und wobei die Steuereinrichtung die Belastung des Antriebsmotors, insbesondere den Stromfluss durch den Antriebsmotor, erfasst und in Abhängigkeit von der Belastung des Antriebsmotors auf den Verschleiß des Rakelelements schließt,
- Figur 13: ein weiteres Ausführungsbeispiel für eine Anordnung zum Aufrakeln eines Pulvers mit einer Verschleißbestimmungseinrichtung, wobei die Verschleißbestimmungseinrichtung einen Sensor zum Bestimmen des Verschleißes des Rakelelements umfasst und der Sensor entlang der Länge des Rakelelements verschiebbar ist,

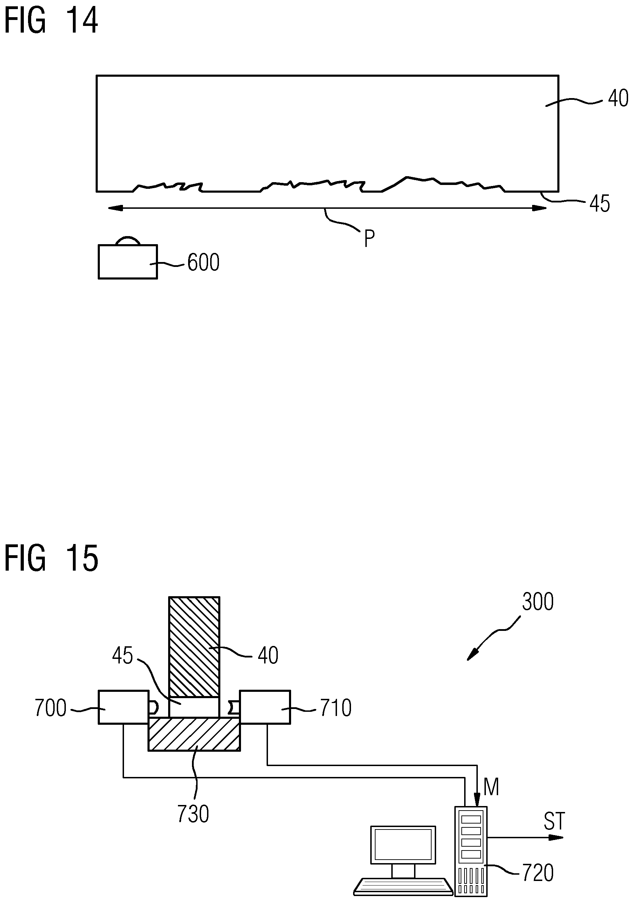

- Figur 14: die Verschiebbarkeit des Sensors gemäß Figur 13 in einer Sicht von vorn und
- Figur 15: ein weiteres Ausführungsbeispiel für eine Verschleißbestimmungseinrichtung für eine Anordnung zum Aufrakeln eines Pulvers, wobei die Verschleißbestimmungseinrichtung eine Sendeeinheit und eine Empfangseinheit aufweist, mit der das Verschleißausmaß des Rakelelements erfasst wird.

In den Figuren werden der Übersicht halber für identische oder vergleichbare Komponenten stets dieselben Bezugszeichen verwendet.

Die Figur 1 zeigt eine Anordnung 10 zum Aufrakeln eines Pulvers. Die Anordnung 10 umfasst eine Prozesskammer 20, in der sich eine Beschichtungsplattform 30 sowie ein Rakelelement 40 in Form einer Rakellippe befindet. Das Rakelelement 40 wird von einem Mehrfachkopf 50 in Form eines Schwenk- oder Revolverkopfes gehalten, an dem weitere Rakelelemente 41, 42 und 43 angebracht sind.

Die Anordnung 10 lässt sich zum Aufrakeln eines Pulvers wie folgt betreiben:
Zunächst wird das Rakelelement 40 zum Aufrakeln eines Pulvers entlang der Pfeilrichtung P über die Beschichtungsplattform 30 geführt, wodurch das Pulver, insbesondere in Form eines Metall- oder Keramikpulvers, auf die Beschichtungsplattform 30 sowie auf etwaig bereits darauf befindliche Pulverschichten aufgetragen wird. Im Rahmen des Aufrakelns des Pulvers wird es zu einem Verschleiß des Rakelelements 40 im Bereich der aktiven Rakellippenkante 45 kommen, die unmittelbar mit der Beschichtungsplattform 30 zusammenwirkt.

Sobald ein entsprechender Verschleiß der Rakellippenkante 45 erkannt wird und/oder nachdem eine vorgegebene Betriebsdauer für das Rakelelement 40 abgelaufen ist, wird das Rakelelement 40 durch eines der anderen Rakelelemente 41, 42 oder 43 ersetzt, indem der Mehrfachkopf 50 um seine Schwenkachse 51 geschwenkt wird.

Bei dem Ausführungsbeispiel gemäß Figur 1 ist es somit möglich, nacheinander insgesamt vier Rakelelemente 40, 41, 42 und 43 in Betrieb zu nehmen, ohne dass die Prozesskammer 20 geöffnet und in die Prozesskammer 20 eingegriffen werden muss. Der Mehrfachkopf 50 bildet bei dem Ausführungsbeispiel gemäß Figur 1 eine Austauscheinrichtung 100 zum Austausch des jeweils aktiven Rakelelements.

Die Figur 2 zeigt ein weiteres Ausführungsbeispiel für eine Anordnung 10, die eine Prozesskammer 20, eine Beschichtungsplattform 30 sowie ein Rakelelement 40 in Form einer Rakellippe aufweist. Das Rakelelement 40 wird von einer Rakelhalterung 60 gehalten, die mit einer nur angedeuteten Transporteinrichtung 70 in Verbindung steht.

Die Transporteinrichtung 70 dient während des Aufrakelns eines Pulvers dazu, das Rakelelement 40 entlang der Pfeilrichtung P über die Beschichtungsplattform 30 zu führen und somit das Pulver auf die Beschichtungsplattform 30 aufzurakeln.

Sobald das Rakelelement 40, insbesondere dessen Rakellippenkante 45, verschlissen ist und/oder nachdem eine vorgegebene maximale Betriebsdauer des Rakelelements 40 überschritten ist, wird das Rakelelement 40 durch ein anderes Rakelelement ausgetauscht, das in einer Wechselstation 80 der Anordnung 10 vorhanden ist. Bei dem Ausführungsbeispiel gemäß Figur 2 kann man zwei weitere Rakelelemente 41 und 42 erkennen, die in der Wechselstation 80 gelagert sind. Eines der beiden Rakelelemente, nämlich das Rakelelement 41, ist bereits verschlissen, wie sich an der verschlissenen Rakellippenkante 45 des Rakelelements 41 erkennen lässt. Das Rakelelement 42 ist hingegen noch intakt und kann zum Einsatz kommen, sobald das Rakelelement 40 verschlissen ist bzw. ausgetauscht werden soll.

Zum Austausch des Rakelelements 40 wird das Rakelelement 40 durch die Transporteinrichtung 70 zur Wechselstation 80 transportiert und durch das noch intakte Rakelelement 42 ersetzt. Dabei wird das Rakelelement 40 in der Wechselstation 80 deponiert und das Rakelelement 42 mittels der Transporteinrichtung 70 in Richtung der Beschichtungsplattform 30 bewegt, damit nachfolgend mit diesem neuen Rakelelement 42 das weitere Beschichten bzw. Aufrakeln des Pulvers erfolgen kann.

Bei dem Ausführungsbeispiel gemäß Figur 2 bilden die Transporteinrichtung 70 sowie die Wechselstation 80 eine Austauscheinrichtung 100, mit der ein Austausch eines zum Beschichten eingesetzten Rakelelements 40 durch ein anderes neues Rakelelement 42 erfolgen kann.

Die Figur 3 zeigt ein weiteres Beispiel für eine Anordnung 10 zum Beschichten eines Pulvers. Bei diesem Ausführungsbeispiel befinden sich in einer Prozesskammer 20 eine Beschichtungsplattform 30 sowie ein Rakelelement 40, das relativ zu der Beschichtungsplattform derart verschiebbar ist, dass ein zum Aufrakeln eines Pulvers aktiver Abschnitt durch einen anderen, zuvor nicht aktiven Abschnitt des Rakelelements ersetzt werden kann. Dies ermöglicht es, einen verschlissenen Abschnitt des Rakelelements 40 durch einen nicht verschlissenen Abschnitt zu ersetzen.

Um das Ersetzen eines Rakelabschnitts in der beschriebenen Weise zu ermöglichen, ist in der Prozesskammer 20 eine Verschiebeeinrichtung 70 angeordnet, die nicht nur ein Verschieben des Rakelelements 40 entlang der Pfeilrichtung R über der Beschichtungsplattform 30 ermöglicht, sondern darüber hinaus auch ein Verschieben des Rakelelements 40 senkrecht zur Bildebene in Figur 3, also senkrecht zur Pfeilrichtung R.

Die Figur 4 zeigt das Rakelelement 40 gemäß Figur 3 in einer Sicht von vorn. Man erkennt die Rakellippenkante 45, die abschnittsweise auf einem Beschichtungsabschnitt 32 der Beschichtungsplattform 30 gemäß Figur 3 aufliegt. Dieser Abschnitt kann auch als aktiver Abschnitt des Rakelelements 40 bezeichnet werden. Der aktive Rakelabschnitt ist in der Figur 4 mit dem Bezugszeichen 47 gekennzeichnet.

Neben dem aktiven Rakelabschnitt 47, der auf dem Beschichtungsabschnitt 32 der Beschichtungsplattform 30 aufliegt, weist das Rakelelement 40 einen passiven Rakelabschnitt 48 auf, der außerhalb des Beschichtungsabschnitts 32 liegt und zunächst nicht zum Aufrakeln des Pulvers dient.

Wird während des Betriebs der Anordnung bzw. während des Aufrakelns eines Pulvers festgestellt, dass der aktive Rakelabschnitt 47 insgesamt oder aber zumindest abschnittsweise defekt ist, wie dies in der Figur 4 beispielhaft gezeigt ist, so wird der defekte Abschnitt, der in der Figur 4 mit dem Bezugszeichen 49 gekennzeichnet ist, durch ein Verschieben des Rakelelements 40 entlang der Pfeilrichtung P in Figur 4 durch einen zuvor ungenutzten Abschnitt 49a ersetzt. Dabei wird der defekte Abschnitt 49 aus dem Beschichtungsabschnitt 32 herausgefahren, so dass dieser nachfolgend nicht mehr zum Aufrakeln des Pulvers zur Verfügung steht.

Zusammengefasst lässt sich mit der Verschiebeeinrichtung 70 bei dem Ausführungsbeispiel gemäß den Figuren 3 und 4 ein Verschieben des Rakelelements 40 derart durchführen, dass defekte Abschnitte des Rakelelements aus dem Beschichtungsabschnitt 32 der Beschichtungsplattform 30 herausgeschoben und durch zuvor ungenutzte und noch nicht verschlissene Rakelabschnitte des Rakelelements 40 ersetzt werden.

Bei dem Ausführungsbeispiel gemäß den Figuren 3 und 4 bildet die Verschiebeeinrichtung 70 eine Austauscheinrichtung, mit der ein Austausch eines zum Beschichten eingesetzten Abschnitts des Rakelelements 40 durch einen anderen neuen Abschnitt desselben Rakelelements 40 erfolgen kann.

Die Figuren 5 und 6 zeigen ein weiteres Beispiel für eine Anordnung 10 zum Aufrakeln eines Pulvers. In der Figur 5 erkennt man eine Prozesskammer 20, in der eine Beschichtungsplattform 30 sowie ein Rakelelement 200 zum Aufrakeln eines Pulvers vorhanden sind. Das Rakelelement 200 wird von einer Rakelhalterung 210 gehalten und kann gemeinsam mit dieser mittels einer Verschiebeeinrichtung 220 über der Beschichtungsplattform 30 entlang der Pfeilrichtung R bewegt werden.

Das Rakelelement 200 ist abschnittsweise auf einer Vorratsrolle 230 und abschnittsweise auf einer Aufnahmerolle 240 (bzw. Verschleißrolle) aufgerollt, wie sich in der Figur 6 erkennen lässt. Die Figur 6 zeigt das Rakelelement 200 gemäß Figur 5 in einer Sicht von vorn.

Wie sich der Figur 6 entnehmen lässt, ist es möglich, das Rakelelement 200 von der Vorratsrolle 230 abzurollen und auf der Aufnahmerolle 240 aufzurollen, um einen defekten Rakelabschnitt 201 aus dem Beschichtungsabschnitt 32 der Beschichtungsplattform 30 herauszubewegen. So lässt sich bei dem Ausführungsbeispiel gemäß Figur 6 der defekte Rakelabschnitt 201 auf der Aufnahmerolle 240 aufrollen und eine entsprechende Rakellänge L1 von der Vorratsrolle 230 abrollen, so dass der defekte Rakelabschnitt 201 den Beschichtungsabschnitt 32 verlässt.
Zusammengefasst dienen die Vorratsrolle 230 und die Aufnahmerolle 240 bei dem Ausführungsbeispiel gemäß den Figuren 5 und 6 dazu, durch ein Abrollen des Rakelelements 200 von der Vorratsrolle 230 und ein Aufrollen auf der Aufnahmerolle 240 stets zu gewährleisten, dass der auf dem Beschichtungsabschnitt 32 der Beschichtungsplattform 30 aufliegende Abschnitt des Rakelelements bzw. der Rakellippenkante 45 defektfrei oder zumindest defektarm ist. Mit anderen Worten bilden die Vorratsrolle 230 und die Aufnahmerolle 240 eine Austauscheinrichtung, mit der ein Austausch eines zum Beschichten eingesetzten Abschnitts des Rakelelements 40 durch einen anderen neuen Abschnitt desselben Rakelelements 40 erfolgen kann.
Die Figur 7 zeigt eine Weiterbildung des Ausführungsbeispiels gemäß den Figuren 5 und 6. Es lässt sich erkennen, dass die Anordnung 10 zusätzlich zu der Vorratsrolle 230 und der Aufnahmerolle 240 eine Ersatzrolle 250 aufweist, auf der ein weiteres Rakelelement 41 aufgerollt ist. Das auf der Ersatzrolle 250 aufgerollte Rakelelement 41 ist mit dem Rakelelement 40, das auf der Vorratsrolle 230 aufgerollt ist, mittels Verbindungselementen 260 derart verbunden, dass nach einem vollständigen Abrollen des Rakelelements 40 von der Vorratsrolle 230 nachfolgend das Rakelelement 41 von der Ersatzrolle 250 abgerollt und in den Beschichtungsabschnitt 32 der Beschichtungsplattform 30 hineinbewegt werden kann.
Bei dem Ausführungsbeispiel gemäß Figur 7 stehen also zwei Rakelelemente 40 und 41 zum Aufrakeln eines Pulvers zur Verfügung, wobei das Rakelelement 41 erst in Einsatz kommt, wenn das Rakelelement 40 vollständig von der Vorratsrolle 230 abgerollt worden ist. In entsprechender Weise können in kaskadierter Form weitere Rakelelemente und weitere Ersatzrollen vorgesehen werden.

Bei dem Ausführungsbeispiel gemäß Figur 7 bilden die Vorratsrolle 230, die Aufnahmerolle 240 und die Ersatzrolle 250 eine Austauscheinrichtung, mit der ein Austausch eines zum Beschichten eingesetzten Abschnitts eines Rakelelements 40 durch einen anderen neuen Abschnitt desselben Rakelelements 40 oder eines anderen Rakelelements 41 erfolgen kann.

Die Figur 8 zeigt ein Ausführungsbeispiel für eine Anordnung 10 zum Aufrakeln eines Pulvers, bei der zusätzlich zu einer nicht weiter dargestellten Austauscheinrichtung eine Verschleißbestimmungseinrichtung 300 vorhanden ist, mit der der Verschleiß des Rakelelements 40 bestimmt werden kann.

Die Verschleißbestimmungseinrichtung 300 weist bei dem Ausführungsbeispiel gemäß Figur 8 eine Bildaufnahmeeinrichtung 310 in Form einer Kamera auf, die entweder innerhalb der Prozesskammer 20 oder außerhalb der Prozesskammer 20 angeordnet sein kann. Die Bildaufnahmeeinrichtung 310 steht mit einer Bildauswerteinrichtung 320, zum Beispiel in Form eines Computers, in Verbindung.

Während des Betriebs der Anordnung 10, also während des Aufrakelns eines Pulvers auf der Beschichtungsplattform 30, wird mit der Bildaufnahmeeinrichtung 310 die Rakellippenkante 45 des Rakelelements 40 beobachtet. Die von der Bildaufnahmeeinrichtung 310 gelieferten Bilder B werden zur Bildauswerteinrichtung 320 übertragen, die mittels eines computergestützten Bildauswertverfahrens die Bilder auswertet und auf den Verschleißzustand der Rakellippenkante 45, beispielsweise durch Bildvergleich, schließt.

Sobald die Bildauswerteinrichtung 320 im Rahmen der Bildauswertung feststellt, dass die Rakellippenkante 45 des Rakelelements verschlissen ist, erzeugt sie ein Steuersignal ST, das zu einer in der Figur 8 aus Gründen der Übersicht nicht gezeigten Austauscheinrichtung übermittelt wird, um einen Austausch des Rakelelements 40 insgesamt oder einen Austausch eines Teilabschnitts des Rakelelements 40 auszulösen, wie dies im Zusammenhang mit den Figuren 1 bis 7 oben bereits beispielhaft im Detail erläutert worden ist.

Die Figur 9 zeigt ein weiteres Ausführungsbeispiel für eine Verschleißbestimmungseinrichtung 300, wie sie bei einer Anordnung zum Aufrakeln eines Pulvers auf einer Beschichtungsplattform 30 eingesetzt werden kann. Bei dem Ausführungsbeispiel gemäß Figur 9 umfasst die Verschleißbestimmungseinrichtung 300 einen Sensor 340, insbesondere in Form eines Belastungssensors, der die auf das Rakelelement 40 einwirkende Belastung misst und an eine mit dem Sensor 340 in Verbindung stehende Signalverarbeitungseinrichtung 350 überträgt. Die Signalverarbeitungseinrichtung 350 wertet die von dem Sensor 340 gelieferten Sensorsignale SS aus und erzeugt ausgangsseitig ein Steuersignal ST, wenn sich aus den Signalen SS des Sensors 340 schließen lässt, dass die Rakellippenkante 45 des Rakelelements verschlissen ist oder zumindest verschlissen sein könnte.

Bei dem Ausführungsbeispiel gemäß Figur 9 ist der Sensor 340 im Bereich der das Rakelelement 40 haltenden Rakelhalterung 360 angeordnet. Alternativ kann der Sensor 340 auch an anderer Stelle angeordnet sein, wie anhand der nachfolgenden Ausführungsbeispiele noch näher erläutert werden wird. Bei dem Sensor 340 kann es sich beispielsweise um einen Kraftsensor handeln, der die auf das Rakelelement 40, insbesondere die Rakellippenkante 45, wirkende mechanische Kraft und/oder die Temperatur des Rakelelements 40 misst.

Die Figur 10 zeigt ein weiteres Beispiel für einen Sensor 340, der bei der Verschleißbestimmungseinrichtung 300 gemäß Figur 9 eingesetzt werden kann. Bei dem Ausführungsbeispiel gemäß Figur 10 ist der Sensor 340 nicht innerhalb der Rakelhalterung 360 gemäß Figur 9 angeordnet, sondern stattdessen außen an dem Rakelelement 40. Vorzugsweise erstreckt sich der Sensor 340 entlang der gesamten Rakelbreite, mit der das Rakelelement 40 auf der Beschichtungsplattform 30 (vgl. Figur 9) aufliegt, um den Zustand des Rakelelements 40 in dem besonders belasteten Rakelbereich erfassen zu können.

Der Sensor 340 kann die Belastung des Rakelelements 40, beispielsweise die Kraftbelastung und/oder die Temperaturbelastung des Rakelelements 40, ortsaufgelöst über der Breite des Rakelelements 40 messen und entsprechende ortsaufgelöste Messwerte M zur Signalverarbeitungseinrichtung 350 der Verschleißbestimmungseinrichtung 300 übermitteln. Alternativ oder zusätzlich kann auch ein gemittelter Belastungsmesswert M, der einen mittleren Belastungswert über der Rakelbreite des Rakelelements 40 angibt, zur Signalverarbeitungseinrichtung 350 übertragen werden. Bei dem Sensor 340 kann es sich beispielsweise um einen Dehnungsmessstreifen handeln.

Die Figur 11 zeigt ein Ausführungsbeispiel für eine Verschleißbestimmungseinrichtung 300, bei der das Rakelelement 40 aus einem Werkstoff hergestellt ist, dem mindestens ein reaktionsfähiges System zugesetzt ist, welches die lokale Krafteinwirkung und/oder die lokale Temperatur über der gesamten aktiven Rakellippenkante 45 des Rakelelements 40 erfassen kann. Das reaktionsfähige System bildet eine Vielzahl an Sensoren S, die nebeneinander im Bereich der Rakellippenkante 45 angeordnet sind und eine ortsaufgelöste Messung des Zustands der Rakellippenkante 45 des Rakelelements 40 ermöglichen. Die Messwerte M der Sensoren S gelangen zu einer Signalverarbeitungseinrichtung 350, die die Messwerte M auswertet und ein Steuersignal ST zum Ersetzen des aktiven Rakelelements 40 auslöst, sobald ein entsprechender Verschleiß des Rakelelements 40 festgestellt worden ist.

Die Figur 12 zeigt ein weiteres Ausführungsbeispiel für eine Anordnung 10 zum Aufrakeln eines Pulvers. Die Anordnung 10 umfasst eine Prozesskammer 20, in der eine Beschichtungsplattform 30 sowie ein Rakelelement 40 angeordnet sind. Das Rakelelement 40 wird durch eine Bewegungseinrichtung 500 über der Beschichtungsplattform 30 verfahren, um ein Aufrakeln eines Pulvers auf der Beschichtungsplattform 30 zu ermöglichen.

Die Bewegungseinrichtung 500 umfasst einen Antriebsmotor 510, der von einer Verschleißbestimmungseinrichtung 300 überwacht wird. Die Verschleißbestimmungseinrichtung 300 weist eine Steuereinrichtung 400 auf, die den Belastungszustand des Antriebsmotors 510, insbesondere den Stromfluss durch den Antriebsmotor 510, überwacht und auf einen Verschleiß des Rakelelements 40 schließt, wenn die Belastung des Antriebsmotors 510 während des Rakelbetriebs zunimmt und/oder sich über ein vorgegebenes Belastungsänderungsmaß hinaus im zeitlichen Verlauf zu stark verändert. Stellt die Verschleißeinrichtung 300 im Rahmen der Überwachung des Antriebsmotors 510 fest, dass das Rakelelement 40 voraussichtlich verschlissen ist, so erzeugt es ein Steuersignal ST, mit dem eine in der Figur 12 nicht gezeigte Austauscheinrichtung einen Austausch des Rakelelements 40 durch ein neues bzw. noch unverschlissenes Rakelelement hervorruft.

Die Figur 13 zeigt ein Ausführungsbeispiel für eine Verschleißbestimmungseinrichtung 300, bei der ein Sensor 600 mittels einer nicht weiter dargestellten Sensortransporteinrichtung entlang der Rakellippenkante 45 des Rakelelements 40 verfahrbar ist, um eine ortsaufgelöste Messung des Zustands der Rakellippenkante 45 zu ermöglichen. Die Messwerte M des Sensors 600 gelangen zu einer Signalverarbeitungseinrichtung 610, die die Messwerte M auswertet und ein Steuersignal ST erzeugt, sobald die Messwerte M des Sensors 600 auf eine verschlissene Rakellippenkante 45 schließen lassen.

Die Figur 14 zeigt das Verfahren des Sensors 600 gemäß Figur 13 entlang der Rakellippenkante 45 näher im Detail. Die Verfahrrichtung, mit der der Sensor 600 mittels der Sensortransporteinrichtung an der Rakellippenkante 45 vorbeigefahren wird, ist in der Figur 14 mit dem Bezugszeichen P gekennzeichnet.

Die Figur 15 zeigt ein Ausführungsbeispiel für eine Verschleißbestimmungseinrichtung 300, die eine Sendeeinheit 700 sowie eine zugeordnete Empfangseinrichtung 710 aufweist. Mit der Sendeeinrichtung 700 wird eine Strahlung, beispielsweise eine elektromagnetische Strahlung in Form von Licht, beispielsweise infrarotem Licht oder UV-Licht, erzeugt und in Richtung der Rakellippenkante 45 des Rakelelements 40 gesendet. Die Strahlung durchdringt und/oder passiert die Rakellippenkante 45 und wird von der Empfangseinrichtung 710 gemessen.

Die von der Empfangseinrichtung 710 aufgenommenen Messwerte M gelangen zu einer Signalverarbeitungseinrichtung 720, die die Messwerte M auswertet und auf einen Verschleiß der Rakellippenkante 45 schließen kann. Um einen Messfehler beispielsweise durch Reflexion der von der Sendeeinheit 700 erzeugten Strahlung zu vermeiden, ist bei dem Ausführungsbeispiel gemäß Figur 15 zusätzlich eine Abschirmeinheit 730 vorgesehen, die die Strahlenverbindung zwischen der Sendeeinheit 700 und der Empfangseinheit 710 bei der Darstellung gemäß Figur 15 nach unten abschließt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung (10) mit einer Prozesskammer (20), einer in der Prozesskammer (20) befindlichen Beschichtungsplattform (30) und einer Rakeleinrichtung mit einem in der Prozesskammer (20) befindlichen Rakelelement (40) zum Aufrakeln eines Pulvers, insbesondere eines Metall- oder Keramikpulvers, wobei die Anordnung (10) eine Austauscheinrichtung (100) aufweist, die zum Ersetzen mindestens eines Abschnitts des Rakelelements (40) durch einen anderen Abschnitt desselben Rakelelements (40) oder zum Ersetzen des gesamten Rakelelements (40) durch ein anderes Rakelelement (41, 42, 43) innerhalb der Prozesskammer (20) und bei geschlossener Prozesskammer (20) geeignet ist,
**dadurch gekennzeichnet, dass**
- die Anordnung (10) eine mit der Austauscheinrichtung (100) verbundene Verschleißbestimmungseinrichtung (300) zum Bestimmen des Verschleißes des Rakelelements (40) aufweist und
- die Verschleißbestimmungseinrichtung (300) derart ausgestaltet ist, dass sie ein Steuersignal (ST) für die Austauscheinrichtung (100) zum Ersetzen des aktiven Abschnitts des aktivierten Rakelelements (40) durch einen anderen Abschnitt desselben Rakelelements (40) oder zum Ersetzen des gesamten aktivierten Rakelelements (40) durch ein anderes Rakelelement (41) erzeugt, wenn das aktivierte Rakelelement (40) oder der aktive Abschnitt des aktivierten Rakelelements (40) verschlissen ist.

2. Anordnung nach Anspruch 1,
**dadurch gekennzeichnet, dass**
die Austauscheinrichtung (100) einen Mehrfachkopf (50), insbesondere einen Schwenkkopf oder Revolverkopf, aufweist, an dem zumindest zwei Rakelelemente (40, 41, 42, 43) befestigt sind, die wahlweise zum Aufrakeln des Pulvers auf der Beschichtungsplattform (30) ausgewählt und aktiviert werden können.

3. Anordnung nach einem der voranstehenden Ansprüche,
**dadurch gekennzeichnet, dass**
- die Austauscheinrichtung (100) eine Wechselstation (80), in der ein oder mehrere andere Rakelelemente (41, 42) gelagert sind, und eine Transporteinrichtung (70) aufweist, und
- die Transporteinrichtung (70) geeignet ist, das jeweils zum Aufrakeln des Pulvers aktivierte Rakelelement (40) durch eines der anderen Rakelelemente (41, 42) zu ersetzen, das oder die in der Wechselstation (80) gelagert sind.

4. Anordnung nach einem der voranstehenden Ansprüche,
**dadurch gekennzeichnet, dass**
die Austauscheinrichtung (100) eine Verschiebeeinrichtung (70) umfasst, die ein Verschieben eines auszutauschenden Abschnitts des aktivierten Rakelelements (40) relativ zu der Beschichtungsplattform (30) derart ermöglicht, dass der auszutauschende Abschnitt des Rakelelements (40) aus dem ihm zugeordneten Beschichtungsabschnitt (32) auf der Beschichtungsplattform (30) herausgeschoben und durch einen anderen Abschnitt desselben Rakelelements (40) ersetzt wird.

5. Anordnung nach einem der voranstehenden Ansprüche,
**dadurch gekennzeichnet, dass**
- ein Teil des Rakelelements (40) auf einer Vorratsrolle (230) aufgerollt ist und
- die Austauscheinrichtung (100) derart ausgestaltet ist, dass sie zum Austauschen eines auszutauschenden Abschnitts des Rakelelements (40) einen Teilabschnitt des Rakelelements (40) von der Vorratsrolle (230) abrollt und einen anderen Teilabschnitt des Rakelelements (40) auf einer korrespondierenden Aufnahmerolle (240) aufrollt.

6. Anordnung nach Anspruch 5,
**dadurch gekennzeichnet, dass**
- die Austauscheinrichtung (100) eine Ersatzrollenaufnahmevorrichtung zur Aufnahme mindestens einer Ersatzrolle (250) aufweist, auf der ein anderes Rakelelement (41) aufgerollt ist, und
- die Ersatzrollenaufnahmevorrichtung relativ zu der Vorratsrolle (230) derart angeordnet ist, dass das andere Rakelelement (41) auf der Ersatzrolle (250) mit dem Rakelelement (40) auf der Vorratsrolle (230) zwecks Gewährleistung eines kontinuierlichen Rakelbetriebs verbindbar ist.

7. Anordnung einem der voranstehenden Ansprüche,
**dadurch gekennzeichnet, dass**
- die Anordnung (10) eine Rakelbewegungseinrichtung aufweist und
- die Verschleißbestimmungseinrichtung (300) geeignet ist, den Antriebsmotor (510) zu überwachen und auf einen Verschleiß des Rakelelements (40) zu schließen, wenn eine Belastungsänderung des Antriebsmotors (510) erfasst wird.

8. Anordnung nach einem der voranstehenden Ansprüche,
**dadurch gekennzeichnet, dass**
die Verschleißbestimmungseinrichtung (300) einen Verschleißsensor, insbesondere in Form einer Bildaufnahmeeinrichtung (310), einer Lichttransmissionsmesseinrichtung, eines kapazitiven Sensorelements oder eines Kraftsensors, umfasst.

9. Anordnung nach einem der voranstehenden Ansprüche,
**dadurch gekennzeichnet, dass**
das Rakelelement (40) aus einem Werkstoff hergestellt ist, dem mindestens ein reaktionsfähiges System zugesetzt ist, welches die lokale Krafteinwirkung oder die lokale Temperatur über die gesamte aktive Rakelkante des Rakelelements (40) oder zumindest einen Abschnitt davon erfassen kann.

10. Anordnung nach Anspruch 8 oder 9,
**dadurch gekennzeichnet, dass**
der Sensor (340, 600) die gesamte aktive Rakelkante des Rakelelements (40) erfasst.

11. Anordnung nach einem der voranstehenden Ansprüche 8 bis 10,
**dadurch gekennzeichnet, dass**
die Anordnung (10) eine Sensorbewegungseinrichtung aufweist, mit der sich der Sensor (340, 600) zur Verschleißbestimmung relativ zum Rakelelement (40) bewegen lässt.

12. Anordnung nach einem der voranstehenden Ansprüche,
**dadurch gekennzeichnet, dass**
die Verschleißbestimmungseinrichtung (300) eine Bildaufnahmeeinrichtung (310) zur Beobachtung des Rakelelements (40) und eine mit der Bildaufnahmeeinrichtung (310) verbundene Bildauswerteinrichtung (320) aufweist, die zur Bestimmung des Verschleißzustands des Rakelelements (40) anhand der Bilder (B) der Bildaufnahmeeinrichtung (310) geeignet ist.

13. Anordnung nach einem der voranstehenden Ansprüche,
**dadurch gekennzeichnet, dass**
die Verschleißbestimmungseinrichtung (300) aufweist:
- einen Kraftsensor (340, 600), der am oder im Rakelelement (40) angeordnet ist und zur Messung der Krafteinwirkung auf das Rakelelement (40) während des Rakelvorgangs geeignet ist, und
- eine Auswerteinrichtung (320), die anhand der Kraftmesswerte auf den Verschleißzustand des Rakelelements (40) schließt.

## Claims

1. Arrangement (10) with a process chamber (20), a coating platform (30) located in the process chamber (20) and a coating device with a coating element (40) located in the process chamber (20) for the coating of a powder, especially a metallic or ceramic powder, wherein the arrangement (10) has an exchanging device (100) which is suitable for replacing at least one portion of the coating element (40) with another portion of the same coating element (40) or for replacing the entire coating element (40) with another coating element (41, 42, 43) within the process chamber (20) and when the process chamber (20) is closed, **characterized in that**
- the arrangement (10) has a wear determination device (300) connected to the exchanging device (100) for determining the wear on the coating element (40), and
- the wear determination device (300) is designed such that it generates a control signal (ST) for the exchanging device (100) to replace the active portion of the activated coating element (40) with another portion of the same coating element (40) or to replace the entire activated coating element (40) with another coating element (41) when the activated coating element (40) or the active portion of the activated coating element (40) is worn down.

2. Arrangement according to Claim 1, **characterized in that** the exchanging device (100) has a multiple head (50), especially a swivel head or revolver head, on which at least two coating elements (40, 41, 42, 43) are fastened, which can be optionally selected and activated for the coating of the powder on the coating platform (30).

3. Arrangement according to one of the preceding claims, **characterized in that**
- the exchanging device (100) has an exexchanging station (80), in which one or more other coating elements (41, 42) are stockpiled, and a transport device (70), and
- the transport device (70) is suitable for replacing the coating element (40) activated in each case for the coating of the powder with one of the other coating elements (41, 42) which are stockpiled in the exexchanging station (80).

4. Arrangement according to one of the preceding claims, **characterized in that** the exchanging device (100) has a moving device (70), which enables a moving of a portion of the activated coating element (40) being exchanged relative to the coating platform (30), such that the portion of the coating element (40) being exchanged is pushed out from its assigned coating portion (32) on the coating platform (30) and is replaced by another portion of the same coating element (40).

5. Arrangement according to one of the preceding claims, **characterized in that**
- one part of the coating element (40) is wound onto a supply roller (230) and
- the exchanging device (100) is configured such that it rolls off a sub-portion of the coating element (40) from the supply roller (230) for exchanging a portion of the coating element to be replaced and rolls up another sub-portion of the coating element (40) onto a corresponding take-up roller (240).

6. Arrangement according to Claim 5, **characterized in that**
- the exchanging device (100) has a replacement roll holding device for holding at least one replacement roll (250), on which another coating element (41) is wound, and
- the replacement roll holding device is disposed relative to the supply roller (230) such that the other coating element (41) on the replacement roll (250) can be connected to the coating element (40) on the supply roller (230) to ensure a continuous coating operation.

7. Arrangement according to one of the preceding claims, **characterized in that**
- the arrangement (10) has a coating element moving device and
- the wear determination device (300) is suitable for monitoring the drive motor (510) and for identifying a wear of the coating element (40) if a load change in the drive motor (510) is detected.

8. Arrangement according to one of the preceding claims, **characterized in that** the wear determination device (300) comprises a wear sensor, especially in the form of an image recording device (310), a light transmission measuring device, a capacitive sensor element or a force sensor.

9. Arrangement according to one of the preceding claims, **characterized in that** the coating element (40) is made from a material to which at least one reactive system is added, which can detect the local force acting or the local temperature over the entire active coating edge of the coating element (40) or at least a portion thereof.

10. Arrangement according to Claim 8 or 9, **characterized in that** the sensor (340, 600) detects the entire active coating edge of the coating element (40).

11. Arrangement according to one of the preceding Claims 8 to 10, **characterized in that** the arrangement (10) has a sensor movement device with which the sensor (340, 600) can be moved relative to the coating element (40) for the determination of the wear.

12. Arrangement according to one of the preceding claims, **characterized in that** the wear determination device (300) has an image recording device (310) for observation of the coating element (40) and an image evaluation device (320) connected to the image recording device (310), which is suitable for determining the state of wear of the coating element (40) by means of the images (B) of the image recording device (310).

13. Arrangement according to one of the preceding claims, **characterized in that** the wear determination device (300) has:
- a force sensor (340, 600), which is disposed on or in the coating element (40) and is suitable for measuring the force acting on the coating element (40) during the coating process, and
- an evaluation device (320), which identifies the state of wear of the coating element (40) on the basis of the force measurement values.

## Revendications

1. Système (10) ayant une chambre (20) de processus, une plateforme (30) de revêtement se trouvant dans la chambre (20) de processus et un dispositif de raclage comprenant un élément (40) de racle, se trouvant dans la chambre (20) de processus, pour le raclage d'une poudre, notamment d'une poudre métallique ou en céramique, l'agencement (10) ayant un dispositif (100) d'échange, qui est propre à remplacer au moins une partie de l'élément (40) de racle par une autre partie de ce même élément (40) de racle ou à remplacer tout l'élément (40) de racle par un autre élément (41, 42, 43) de racle dans la chambre de processus et alors que la chambre (20) de processus est fermée,
**caractérisé en ce que**
- l'agencement (10) a un dispositif (300) de détermination de l'usure, relié au dispositif (100) d'échange, afin de déterminer l'usure de l'élément (40) de racle et
- le dispositif (300) de détermination de l'usure est conformé de manière à produire un signal (ST) de commande du dispositif (100) d'échange pour remplacer la partie active de l'élément (40) de racle activé par une autre partie de ce même élément (40) de racle ou pour remplacer tout l'élément (40) de racle activé par un autre élément (41) de racle si l'élément (40) de racle activé ou la partie active de l'élément (40) de racle activé est usé.

2. Système suivant la revendication 1,
**caractérisé en ce que**
le dispositif (100) d'échange a une tête (50) multiple, notamment une tête pivotante ou une tête révolver, à laquelle sont fixés au moins deux éléments (40, 41, 42, 43) de racle, qui peuvent, au choix, être choisis et activés pour racler la poudre sur la plateforme (30) de revêtement.

3. Système suivant l'une des revendications précédentes,
**caractérisé en ce que**
- le dispositif (100) d'échange a un poste (80) d'échange où sont emmagasinés un ou plusieurs autres éléments (41, 42) de racle et un dispositif (70) de transport et
- le dispositif (70) de transport est propre à remplacer l'élément (40) de racle activé pour le raclage de la poudre par l'un des autres éléments (41, 42) de racle, qui est ou sont emmagasinés dans le poste (80) de remplacement.

4. Système suivant l'une des revendications précédentes,
**caractérisé en ce que**
le dispositif (100) d'échange comprend un dispositif (70) de déplacement, qui rend possible un déplacement d'une partie à changer de l'élément (40) de racle activé par rapport à la plateforme (30) de revêtement, de manière à ce que la partie à changer de l'élément (40) de racle soit sortie de la partie (32) de revêtement, qui lui est affectée sur la plateforme (30) de revêtement, et soit remplacée par une autre partie de ce même élément (40) de racle.

5. Système suivant l'une des revendications précédentes,
**caractérisé en ce que**
- une partie de l'élément (40) de racle est enroulée sur un rouleau (230) de réserve et
- le dispositif (100) d'échange est conformé de manière à dérouler, pour l'échange d'une partie à changer de l'élément (40) de racle, un tronçon de l'élément (40) de racle du rouleau (230) de réserve et à enrouler un autre tronçon de l'élément (40) de racle sur un rouleau (240) de réception correspondant.

6. Système suivant la revendication 5,
**caractérisé en ce que**
- le dispositif (100) d'échange a un système de réception de rouleau de remplacement, pour recevoir au moins un rouleau (250) de remplacement, sur lequel un autre élément (41) de racle est enroulé et
- le système de réception de rouleau de remplacement est monté, par rapport au rouleau (230) de réserver, de manière à ce que l'autre élément (41) de racle sur le rouleau (250) de remplacement puisse être relié à l'élément (40) de racle sur le rouleau (230) de réserve, en vue d'assurer un fonctionnement de raclage continu.

7. Système suivant l'une des revendications précédentes,
**caractérisé en ce que**
- le système (10) a un dispositif de déplacement de racle et
- le dispositif (300) de détermination de l'usure est propre à contrôler le moteur (510) d'entraînement et à décider d'une usure de l'élément (40) de racle si est détectée une variation de charge du moteur (510) d'entraînement.

8. Système suivant l'une des revendications précédentes,
**caractérisé en ce que**
le dispositif (300) de détermination de l'usure a un capteur d'usure, notamment sous la forme d'un dispositif (310) de prise de vue, d'un dispositif de mesure de la transmission de la lumière, d'un élément capteur capacitif ou d'un capteur de force.

9. Système suivant l'une des revendications précédentes,
**caractérisé en ce que** l'élément (40) de racle est en un matériau auquel est ajouté au moins un système réactif, qui peut détecter l'effet local d'une force ou la température locale sur tout le bord de racle actif de l'élément (40) de racle ou sur au moins une partie de celui-ci.

10. Système suivant la revendication 8 ou 9,
**caractérisé en ce que**
le capteur (340, 600) détecte tout le bord de racle actif de l'élément (40) de racle.

11. Système suivant l'une des revendications précédentes 8 à 10,
**caractérisé en ce que**
le système (10) a un dispositif de déplacement de capteur par lequel le capteur (340, 600) peut, pour la détermination de l'usure, être déplacé par rapport à l'élément (40) de racle.

12. Système suivant l'une des revendications précédentes,
**caractérisé en ce que**
le dispositif (300) de détermination de l'usure a un dispositif (310) de prise de vue pour observer l'élément (40) de racle et un dispositif (320) d'exploitation d'image, qui est relié au dispositif (310) de prise de vue et qui est propre à déterminer l'état d'usure de l'élément (40) de racle à l'aide des images (B) du dispositif (310) de prise de vue.

13. Système suivant l'une des revendications précédentes, **caractérisé en ce que**
le dispositif (300) de détermination de l'usure a :
- un capteur (340, 600) de force, qui est monté sur ou dans l'élément (40) de racle et qui est propre à mesurer l'effet d'une force sur l'élément (40) de racle pendant l'opération de raclage et
- un dispositif (320) d'exploitation, qui, à l'aide des valeurs de mesure de force, décide de l'état d'usure de l'élément (40) de racle.
